# EUROPÄISCHE PATENTANMELDUNG

(11) **EP 1 098 240 A2**
(43) Veröffentlichungstag der Anmeldung: **09.05.2001**
(21) Anmeldenummer: 00120801.6
(22) Anmeldetag: 23.09.2000
(51) Int. Cl.: G06F 3/033, G06F 3/023

(54) **Vorrichtung zur Anpassung graphischer Navigationsmittel an unterschiedliche Bildseitenverhältnisse**

(30) Priorität: 04.11.1999 DE 19953140
(71) Anmelder: GRUNDIG Aktiengesellschaft, 90471 Nürnberg (DE)
(72) Erfinder: Herfet, Thorsten, Dr., 90471 Nürnberg (DE)

(57) **Zusammenfassung**

Die Erfindung betrifft eine Vorrichtung zur Durchführung einer graphischen Navigation. Sie weist ein Navigationselement und einen mit diesem verbundenen Detektor auf. Der Detektor detektiert mittels des Navigationselementes eingegebene Befehle und setzt diese in Steuersignale für ein auf einem Wiedergabedisplay darstellbares Anzeigeelement um. Weiterhin ist ein Speicher vorgesehen, der zur Abspeicherung mehrerer Navigationskennlinien dient. Jede dieser Navigationskennlinien ist einem möglichen Bildseitenverhältnis des Wiedergabedisplays zugehörig.

## Beschreibung

Die Erfindung betrifft eine Vorrichtung zur Anpassung graphischer Navigationsmittel an unterschiedliche Bildseitenverhältnisse.

Mittels heutiger Empfangsanlagen für Fernsehsignale können neben den Fernsehsignalen auch Graphiksignale unterschiedlicher Quellen empfangen werden. Die Darstellung der Fernseh- und/oder Graphiksignale erfolgt auf einem Wiedergabedisplay, welches eines von mehreren möglichen Bildseitenverhältnissen aufweist.

Zum Empfang von Satelliten-Rundfunksignalen sind bereits Settop-Boxen bekannt, denen von der Außeneinheit einer Satelliten-Empfangsanlage abgeleitete Signale zugeführt werden. Diese werden in der Settop-Box in Rundfunksignale umgesetzt, die zur Wiedergabe an einen Fernsehempfänger oder im Falle einer Übertragung von Audiosignalen an einen Hörrundfunkempfänger weitergeleitet werden.

Weiterhin ist es bereits bekannt, auf dem Bildschirm eines Fernsehempfängers, beispielsweise in einer im Rahmen des Fernsehtextangebots eines Fernsehsenders übertragenen Programmvorschauseite, einen Cursor mittels Cursorsteuertasten zu bewegen, wobei letztere auf einem Fernbedienungsgeber angeordnet sind.

Bei zukünftigen Multimedia-Terminals wird es eine überlagerte Darstellung von Graphik- und Bewegtbildsignalen geben. Die Quellen der Graphik können dabei sowohl geräteintern als auch extern angeordnet sein. Zu einer verzerrungsfreien Wiedergabe der Signale ist es notwendig, die ursprüngliche Geometrie der Signale beizubehalten.

Liegen externe Graphiksignale vor, die beispielsweise Teile von Internetseiten sind, dann sind die Anzahl der Bildpunkte und das Pixelseitenverhältnis vorgegeben. Eine korrekte Darstellung der Signale auf dem Display kann in diesem Fall durch ein Beibehaltung des senderseitigen Pixelseitenverhältnisses und eine Anpassung der Auflösung erfolgen. Ist mit der vorliegenden Graphik direkt eine graphische Navigation verbunden, beispielsweise beim Vorliegen fernsehbasierter Internet-Browser oder HTML-basierter Nutzerschnittstellen, dann ändert sich mit der Auflösungsanpassung auch die graphische Navigation. Dies bedeutet, daß für die Wegstrecke, die der Breite bzw. Höhe des jeweils vorhandenen Displays entspricht, nun mehr Impulse bzw. Bewegungen eines Navigationselementes notwendig sind. Dies ist aus Nutzersicht oft nicht tolerierbar.

Ausgehend von diesem Stand der Technik liegt der Erfindung die Aufgabe zugrunde, eine Vorrichtung zur Durchführung einer graphischen Navigation anzugeben, die für den Benutzer vereinfacht bedienbar ist.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß nutzerseitige Gewohnheiten im Zusammenhang mit der Steuerung eines vorhandenen Navigationselementes unabhängig vom Bildseitenverhältnis des vorhandenen Displays und auch unabhängig vom jeweils vorliegenden Navigationskontext beibehalten werden können. Die Anzahl der durch die Bedienung des Navigationselements ausgelösten Impulse, die für die Bewegung des Anzeigeelements über eine Displaybreite bzw. -höhe notwendig ist, ist stets gleich.

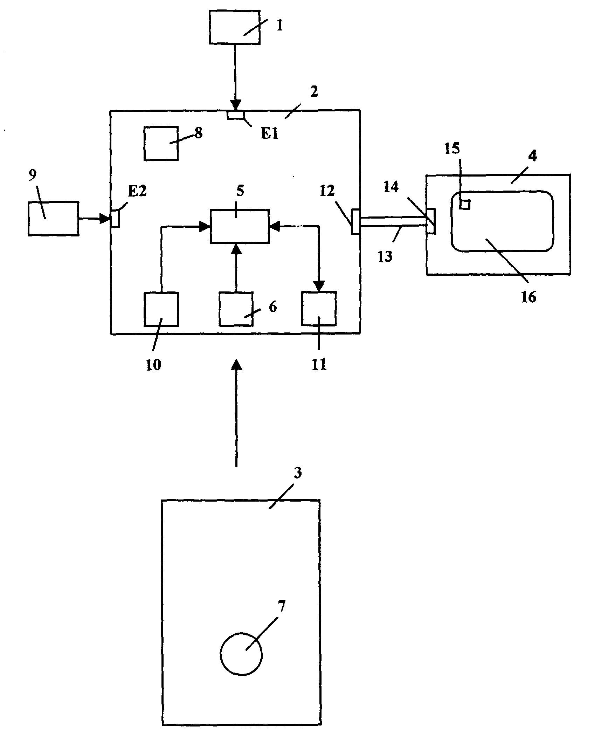

Weitere vorteilhafte Eigenschaften der Erfindung ergeben sich aus der Erläuterung eines Ausführungsbeispiels anhand der Figur.

Diese zeigt eine Vorrichtung zum Empfang von Satelliten-Rundfunksignalen, die eine Außeneinheit 1, eine Settop-Box 2, einen Fernbedienungsgeber 3 und einen Fernsehempfänger 4 mit einem Wiedergabedisplay 16 aufweist.

Von einem Rundfunksatelliten ausgestrahlte Satellitenrundfunksignale werden von der Außeneinheit 1 empfangen und in einen niedrigeren Frequenzbereich umgesetzt, in welchem sie der Settop-Box 2 über deren Eingang E1 zugeführt werden. Diese Satellitenrundfunksignale können neben Bewegtbildsignalen auch Graphiksignale aufweisen, die beispielsweise aus dem Internet abgeleitet sind und mit denen eine graphische Navigation verbunden ist.

Alternativ dazu können derartige Graphiksignale auch aus einer anderen Quelle stammen, beispielsweise von einem innerhalb der Settop-Box 2 vorgesehenen Graphikgenerator 8 oder von einem externen Graphikgenerator 9. Der Graphikgenerator 9 steht dabei mit der Settop-Box 2 über deren Eingang E2 in Verbindung.

Innerhalb der Settop-Box 2 erfolgt bei Bedarf eine Umsetzung der Signale in einen Frequenzbereich, in welchem sie über eine EURO-AV-Buchse 12 der Settop-Box und ein EURO-AV-Kabel 13 an eine EURO-AV-Buchse 14 des Fernsehempfängers 4 weitergeleitet werden können. Weiterhin erfolgt in der Settop-Box 2 auch eine Umsetzung des Bildformats der Fernseh- bzw. Graphiksignale, um eine Anpassung an das Format des Wiedergabedisplays 16 herbeizuführen.

Eine graphische Navigation in einem auf dem Display 16 dargestellten Bild erfolgt unter Verwendung eines Navigationselementes 7, welches Bestandteil eines Fernbedienungsgebers 3 ist. Bei dem genannten Navigationselement handelt es sich um einen Trackball, einen Joystick oder eine Wipptaste. Alternativ dazu kann das Navigationselement auch Cursor-Steuertasten aufweisen.

Bei einer Betätigung des Navigationselementes, beispielsweise einem Drehen des Trackballs, werden vom Fernbedienungsgeber 3 Infrarotsignale ausgestrahlt und von einem in der Settop-Box 2 angeordneten Infrarot-Detektor 6 aufgenommen und an einen Mikrocomputer 5 der Settop-Box 2 weitergeleitet.

Der Mikrocomputer 5 ist weiterhin mit einem Schalter 10 und einem Speicher 11 verbunden.

Der Schalter 10 dient zur Eingabe einer Information über das Bildseitenverhältnis des Displays 16 des Fernsehempfängers 4. Liegt beispielsweise ein 16:9-Display vor, dann wird der Schalter 10 vom Benutzer einmalig in eine erste Schaltstellung gebracht und verbleibt dort, solange das genannte 16:9-Display an die Settop-Box 2 angeschlossen bleibt. Liegt hingegen ein 4:3-Display vor, dann wird der Schalter 10 vom Benutzer einmalig in eine zweite Schaltstellung gebracht und verbleibt dort. Bei jeder Aktivierung der Settop-Box 2 erfolgt seitens des Mikrocomputers 5 eine Abfrage der Stellung des Schalters 10, so daß der Mikrocomputer 5 in Betrieb stets eine Information über das Bildseitenverhältnis des Displays 16 des angeschlossenen Fernsehempfängers 4 hat.

Im Speicher 11 sind mehrere Navigationskennlinien abgespeichert, von denen jede einem von mehreren möglichen Bildseitenverhältnissen des Wiedergabedisplays zugehörig ist. Jede dieser Navigationskennlinien ist in einem eigenen Adressenbereich des Speichers 11 abgespeichert, so daß durch eine geeignete Adressierung dieses Speichers gezielt auf jede der Navigationskennlinien zugegriffen werden kann.

Die Adressierung des Speichers 11 erfolgt durch den Mikrocomputer 5, der aufgrund des Erkennens der Schalterstellung des Schalters 10 eine Information über das Bildseitenverhältnis des vorliegenden Fernsehempfängers hat und durch eine zugehörige Adressierung des Speichers 11 auf die jeweils benötigte Navigationskennlinie zugreift.

In vorteilhafter Weise sind im Speicher 11 auch Daten abgespeichert, die Informationen über die Größe des auf dem Wiedergabedisplay darstellbaren Anzeigeelements 15 für jedes der möglichen Bildseitenverhältnisse enthalten. Diese Informationen können im selben Adressenbereich wie die jeweils zugehörige Navigationskennlinie abgespeichert sein ober auch in einem anderen Adressenbereich, welcher beispielsweise unter Verwendung eines im Adressenbereich der Kennlinie vorhandenen Zeigers adressiert wird.

Die benötigte Information über das Bildseitenverhältnis des vorhandenen Fernsehempfängers kann der Mikrocomputer 5 auch automatisch oder nach einer entsprechenden Anfrage über das EURO-AV-Kabel 13 vom Mikrocomputer des Fernsehempfängers 4 erhalten. Zu diesem Zweck wird in einem nichtflüchtigen Speicher des Fernsehempfängers bereits im Werk eine Information über das Bildseitenverhältnis des Fernsehempfängerdisplays abgespeichert. Diese kann dann bei Bedarf an die angeschlossene Settop-Box oder auch an ein anderes angeschlossenes Gerät, in welchem sie benötigt wird, übertragen werden.

Erhält der Mikrocomputer 5 die Information über das Bildseitenverhältnis des Fernsehempfängers direkt vom Mikrocomputer des Fernsehempfängers, dann kann ggf. auf den Schalter 10 verzichtet werden.

Durch die beschriebene Verwendung einer jeweils geeigneten Navigationskennlinie wird erreicht, daß der Benutzer seine Gewohnheiten in bezug auf die Steuerung des auf dem Display darstellbaren Anzeigeelements 15 beim Vorliegen geänderter Display-Seitenverhältnisse bzw. Pixel-Seitenverhältnisse nicht verändern muß. Die Anzahl der Impulse, die durch ein Bewegen des Navigationselementes ausgelöst werden müssen, um eine Navigation über die gesamte Breite oder Höhe des Displays zu bewirken, ist unabhängig vom vorliegenden Displayformat bzw. Pixel-Seitenverhältnis stets gleich.

Die genannten Navigationskennlinien können dabei sowohl einen linearen als auch einen nichtlinearen Verlauf aufweisen. Durch die Verwendung eines nichtlinearen Verlaufes kann dem Umstand Rechnung getragen werden, daß in vielen Fällen der Navigationskontext im Sinne einer Menüdarstellung am linken oder rechten Bildrand plaziert wird. In diesem Fall wird die Anzahl der Impulse für eine Navigation über eine Displaybreite bzw. -höhe beibehalten, ohne daß die Navigationsauflösung an den wichtigen Displaypositionen verringert wird.

## Patentansprüche

1. Vorrichtung zur Durchführung einer graphischen Navigation, mit einem Navigationselement (7) und einem mit dem Navigationselement verbundenen Detektor (5), der mittels des Navigationselementes eingegebene Befehle detektiert und in Steuersignale für ein auf einem Wiedergabedisplay (16) darstellbares Anzeigeelement (15) umsetzt,
**dadurch gekennzeichnet,**
daß sie einen Speicher (11) aufweist, der zur Abspeicherung mehrerer Navigationskennlinien dient, wobei jede Navigationskennlinie einem möglichen Bildseitenverhältnis des Wiedergabedisplays zugehörig ist.

2. Vorrichtung nach Anspruch 1,
**dadurch gekennzeichnet,**
daß das Navigationselement (7) Bestandteil eines Fernbedienungsgebers (3) ist.

3. Vorrichtung nach Anspruch 1 oder 2,
**dadurch gekennzeichnet,**
daß das Navigationselement (7) ein Trackball, ein Joystick oder eine Wipptaste ist oder Cursorsteuertasten aufweist.

4. Vorrichtung nach einem der vorhergehenden Ansprüche,
**dadurch gekennzeichnet,**
daß der Detektor (5) Bestandteil deiner Settop-Box (2) ist und/oder daß die Settop-Box (2) ausgangsseitig mit einem Fernsehempfänger (4) verbunden ist, auf dessen Display (16) das Anzeigeelement (15) darstellbar ist.

5. Vorrichtung nach einem der vorhergehenden Ansprüche,
**dadurch gekennzeichnet,**
daß das Anzeigeelement (15) ein Cursor ist.

6. Vorrichtung nach einem der vorhergehenden Ansprüche,
**dadurch gekennzeichnet,**
daß jeder Navigationskennlinie im Speicher (11) ein eigener Adressenbereich zugeordnet ist und/oder daß die Adressierung des Speichers (11) automatisch erfolgt und/oder daß die Adressierung des Speichers (11) manuell erfolgt.

7. Vorrichtung nach Anspruch 6,
**dadurch gekennzeichnet,**
daß sie Eingabemittel (10) aufweist, mittels derer eine Information über das Bildseitenverhältnis des Wiedergabedisplays (16) eingebbar ist.

8. Vorrichtung nach einem der vorhergehenden Ansprüche,
**dadurch gekennzeichnet,**
daß der Detektor (5) ein Mikrocomputer ist und/oder daß die Navigationskennlinien einen linearen Verlauf aufweisen.

9. Vorrichtung nach einem der vorhergehenden Ansprüche,
**dadurch gekennzeichnet,**
daß die Navigationskennlinien einen nichtlinearen Verlauf aufweisen.

10. Vorrichtung nach einem der vorhergehenden Ansprüche,
**dadurch gekennzeichnet,**
daß der Speicher (11) weiterhin zur Abspeicherung von Daten vorgesehen ist, die Informationen über die Größe des auf dem Wiedergabedisplay darstellbaren Anzeigeelements für jedes der Bildseitenverhältnisse enthalten.
